# EUROPÄISCHE PATENTANMELDUNG

(11) **EP 3 667 132 A1**
(43) Veröffentlichungstag der Anmeldung: **17.06.2020**
(21) Anmeldenummer: 18212293.7
(22) Anmeldetag: 13.12.2018
(51) Int. Cl.: F16J 15/02, F01D 11/00, F01D 25/24, F16J 15/08

(54) **DICHTUNGSANORDNUNG FÜR EIN GETEILTES GEHÄUSE**

(71) Anmelder: Siemens Aktiengesellschaft, 80333 München (DE)
(72) Erfinder: Allebrod, Dirk, 46145 Oberhausen (DE); Klän, Stephan, 10707 Berlin (DE); Sonnen, Stephan, 45289 Essen (DE)

(57) **Zusammenfassung**

Die Erfindung betrifft eine Dichtungsanordnung (01) zur Abdichtung eines Spaltes zwischen zwei Gehäuseteilen (11, 21), wobei der Spalt zwischen gegenüberliegenden Endflächen (13, 23) der Gehäuseteile (11, 21) angeordnet ist. Im ersten Gehäuseteil (11) befindet sich an der ersten Endfläche (13) eine erste Aufnahmenut (14), in der (14) ein aus der Aufnahmenut (14) herausragendes, an einer ersten Außenflanke (15) anliegendes Dichtband (06) angeordnet ist. Dieses (06) greift in eine gegenüberliegende zweite Aufnahmenut (24) des zweiten Gehäuseteils (21) ein und liegt an einer zweiten Außenflanke (25) an. Zur Lagesicherung und zur Erzielung einer Dichtwirkung auch bei fehlendem Differenzdruck ist ein Spiralband (07) vorgesehen, welches (07) in der ersten Aufnahmenut (14) angeordnet ist und auf das Dichtband (06) eine elastische Kraft ausübt.

## Beschreibung

Vorliegend betrachtet wird ein von zumindest zwei Gehäuseteilen gebildetes Gehäuse, wobei die beiden Gehäuseteile zueinander abzudichten sind. Hierzu sind aus dem Stand der Technik vielfältige Dichtungsanordnungen bekannt. Unabhängig davon, ob die Gehäuseteile mit der Stirnseite der Gehäusewandung aufeinanderstoßen oder jeweils einen Flansch aufweisen, so weist zumindest ein Gehäuseteil entlang der Verbindungsstelle eine durchgehende Nut auf, in der ein Dichtelement angeordnet ist. Weiterhin sind Ausführungsformen bekannt, bei denen in beiden gegenüberliegenden Gehäuseteilen jeweils eine Nut angeordnet ist, wobei sich das Dichtelement entlang der gegenüberliegenden Nuten erstreckt und dabei den Spalt zwischen den beiden Flanschen abdeckt.

Unabhängig von der konkreten Ausführungsform der bekannten Lösungen besteht der Konflikt, einerseits eine vorteilhafte Abdichtung zu erzielen und anderseits eine einfache Montage sowohl der Dichtung in der Nut eines Gehäuseteiles als auch insbesondere der Montage des zweiten Gehäuseteils am ersten Gehäuseteil mit vor montierter Dichtung zu ermöglichen. Dies führt vielfach zu dem Problem, dass entweder bei der Montage - insbesondere besonders schwerer, großer Gehäuseteile - die Gefahr der Beschädigung der Dichtung besteht oder andererseits die gewünschte Dichtwirkung nicht realisiert werden kann.

Aufgabe der vorliegenden Erfindung ist es daher, eine Dichtungsanordnung bereitzustellen, die sowohl eine vorteilhafte Montage ermöglicht als auch eine vorteilhafte Dichtigkeit bewirkt, wobei es insbesondere gilt, eine Anwendung bei großen schweren Gehäusebauteilen, beispielsweise einer Gasturbine, zu ermöglichen.

Die gestellte Aufgabe wird durch eine erfindungsgemäße Ausführungsform nach der Lehre des Anspruchs 1 gelöst. Vorteilhafte Ausführungsformen sind Gegenstand der Unteransprüche.

Die gattungsgemäße Dichtungsanordnung dient zur Abdichtung eines Spaltes zwischen zwei Gehäuseteilen. Dabei weist ein erstes Gehäuseteil eine erste Endfläche und ein zweites Gehäuseteil eine der ersten Endfläche gegenüberliegende zweite Endfläche auf. Hierbei sind die beiden Gehäuseteile an den Endflächen aneinandergefügt, sodass sich zwischen den Endflächen ein Spalt bildet. Diesbezüglich ist es unerheblich, ob die Endflächen vollständig oder nur partiell aneinander aufliegen. Zumindest ist die Dichtungsanordnung erforderlich, da eine vollkommen dichte, spaltfreie Auflage der Endflächen aufeinander über deren gesamter Länge nicht gewährleistet werden kann. Insofern dient die Dichtungsanordnung dazu, den möglichen, aber nicht notwendiger Weise vorhandenen, Spalt zwischen den Endflächen abzudichten.

Weiterhin ist gattungsgemäß nur in den Fällen eine Dichtungsanordnung an Gehäuseteilen notwendig, sofern es einen Druckunterschied gibt, der ansonsten zu einem Mediendurchgang durch den Spalt führt. Dabei ist die Dichtungsanordnung nur in den Fällen sinnvoll einsetzbar und auch nur in den Fällen wirksam, wenn ein Mediendruck auf einer Innenseite größer als oder zumindest gleich groß wie ein Mediendruck auf einer Außenseite gegenüberliegend der Innenseite ist. Betrachtet man die Gehäuseteile mit den gegenüberliegenden Endflächen und dem dazwischen abzudichtendem Spalt so liegt die Innenseite auf einer Seite und die Außenseite auf der gegenüberliegenden Seite des Spaltes. Hierbei müssen nicht zwingend die Innenseite mit dem Inneren eines Gehäuses und die Außenseite mit dem Äußeren eines Gehäuses zusammenfallen. Sofern im Inneren eines Gehäuses bestimmungsgemäß ein geringerer Druck das Gehäuse umgebend herrscht, so ist im Inneren die Außenseite (d.h. die Seite mit dem geringeren Druck).

Weiterhin weist die gattungsgemäße Dichtungsanordnung im ersten Gehäuseteil eine erste Aufnahmenut auf. Hierbei verläuft die erste Aufnahmenut entlang der ersten Endfläche und öffnet sich zur gegenüberliegenden zweiten Endfläche. Weiterhin ist es notwendig, dass gegenüberliegend im zweiten Gehäuseteil entlang der zweiten Endfläche eine zweite Aufnahmenut vorhanden ist, welche sich zum ersten Gehäuseteil hin öffnet. Zur Realisierung einer jeweiligen Dichtfläche an den Aufnahmenuten bildet die zur Außenseite weisende Flanke der ersten Aufnahmenut eine erste Außenflanke und die zur Außenseite weisende Flanke der zweiten Aufnahmenut eine zweite Außenflanke.

Gattungsgemäße weist die Dichtungsanordnung ein Dichtelement auf, welches sich entlang der beiden Aufnahmenuten erstreckt und hierbei in beide gegenüberliegende Aufnahmenuten eingreift. Dabei liegt das Dichtelement sowohl an der ersten Außenflanke als auch an der zweiten Außenflanke an und bewirkte hierbei die Abdichtung.

Zur Ermöglichung einer einfachen Montage und dennoch zur Erzielung einer bestmöglichen Abdichtung ist erfindungsgemäß vorgesehen, dass zur Realisierung des Dichtelements ein sich entlang der Aufnahmenut verlaufendes Dichtband eingesetzt wird, welches eine flache Gestalt aufweist und hierbei einerseits längs der Aufnahmenut und andererseits quer zu den Endflächen erstreckt. Das Dichtblech liegt dabei entlang der im Wesentlichen gesamten Länge der Aufnahmenuten an den beiden Außenflanken an.

Zur Gewährleistung der Lage des Dichtbandes insbesondere in der ersten Aufnahmenut einerseits zu Ermöglichung der Montage des zweiten Gehäuseteils nach der Montage des Dichtbandes, als auch andererseits zur Gewährleistung einer sicheren Anlage des Dichtbandes an beiden Außenflanken unabhängig vom Mediendruck wird ein sich längs der ersten Aufnahmenut erstreckendes Spiralband verwendet, welches elastisch in radialer Richtung des Spiralbandes verformt in der ersten Aufnahmenut eingespannt ist und eine radiale Kraft auf das Dichtblech bewirkt.

Durch die erfindungsgemäße Verwendung eines einfachen Dichtbandes in Kombination mit der Verwendung eines Spiralbandes wird sowohl eine einfache Montage ermöglicht als auch zudem die Dichtigkeit im Wesentlichen gewährleistet werden kann.

Die Dichtungsanordnung kann sowohl bei den gegenüberliegenden Stirnseiten von Wänden der Gehäuseteile eingesetzt werden als auch in vorteilhafter Weise in einer Flanschverbindung der Gehäuseteile. Hierbei weist jedes Gehäuseteil zumindest ein sich entlang der Endflächen verlaufenden Flansch auf, wobei entsprechend die Flanschflächen, welche aufeinander zur Auflage kommen, die Endflächen bilden.

Eine sowohl einfachere als auch vorteilhaftere Formgebung für die erste Aufnahmenut wird durch eine im Querschnitt rechteckige Formgebung erzielt. Dieses ermöglicht eine einfache Fertigung als auch ebenso die Lage des Dichtbandes mit dem Spiralband hinreichend gesichert werden kann. Weiterhin kann die Außenflanke vorteilhaft zur Gewährleistung der Abdichtung bearbeitet werden.

Demgegenüber ist es zur Erzielung der gewünschten Dichtigkeit besonders vorteilhaft, wenn die zweite Außenflanke betrachtet in einem Querschnitt einen geneigten bzw. einen bogenförmigen Verlauf aufweist. D. h., dass sich die zweite Außenflanke nicht in einer Verlängerung der ersten Außenflanke erstreckt, sondern vielmehr gegenüber der ersten Außenflanke geradlinig oder bogenförmig geneigt ist. Hierdurch kann die definierte Anlage des Dichtbandes sowohl an der ersten Außenflanke als auch an der zweiten Außenflanke vorteilhaft beeinflusst werden.

Dabei ist es weiterhin besonders vorteilhaft, wenn eine theoretische Verlängerung der ersten Außenflanke die zweite Außenflanke ungefähr in der Mitte schneidet. Die Mitte bezieht sich hierbei auf die halbe Tiefe der zweiten Aufnahmenut ausgehend von der zweiten Endfläche bis zum Nutgrund der zweiten Aufnahmenut. Die geometrische Anordnung der Schnittlinie zwischen der Verlängerung der ersten Außenflanke mit der zweiten Außenflanke wird als ungefähr in der Mitte angesehen, wenn der Abstand von der Mitte betrachtet senkrecht zur zweiten Endfläche maximal 20% der Tiefe der zweiten Aufnahmenut beträgt.

Dabei ist es vorteilhaft, wenn ein äußeres Ende der zweiten Außenflanke als Kante zur zweiten Endfläche zur Außenseite weisend beanstandete von der ersten Außenflanke angeordnet ist.

Durch diese vorteilhafte Gestaltung der zweiten Aufnahmenut mit einem geneigten bzw. bogenförmigen Verlauf, bei dem die Verlängerung der ersten Außenflanke die zweite Außenflanke ungefähr in der Mitte schneidet, ebenso wie die vorteilhafte Anordnung des äußeren Endes der zweiten Außenflanke zur Außenseite versetzt führen dazu, dass beim Fügen des zweiten Gehäuseteils auf dem ersten Gehäuseteil die Endfläche benachbart zur zweiten Aufnahmenut nicht unbeabsichtigt auf das aus der ersten Aufnahmenut herausragende Dichtband aufschlägt. Vielmehr führt die Neigung bzw. der bogenförmige Verlauf dazu, dass ein Einfädeln des Dichtbandes in die zweite Aufnahmenut bewirkt wird.

Weiterhin ist es vorteilhaft, wenn ein inneres Ende der zweiten Außenflanke als Kante zum Nutgrund der zweiten Aufnahmenut zur Innenseite bei Abstand von einer theoretischen Verlängerung der ersten Außenflanke angeordnet ist.

Der geneigte bzw. bogenförmige Verlauf mit der Schnittlinie ungefähr in der Mitte der zweiten Außenflanke ebenso wie die vorteilhafte Anordnung des inneren Endes der zweiten Außenflanke zur Innenseite versetzt führen dazu, dass das Dichtband im Zusammenbau zuverlässig nicht nur an der ersten Außenflanke, sondern auch an der zweiten Außenflanke anliegt. Folglich wird eine einfache und zuverlässige Montage ermöglicht als auch ebenso die geforderte Dichtwirkung gewährleistet werden kann.

Sofern Phasen oder Abrundungen am inneren Ende oder äußeren Ende der zweiten Außenflanke vorhanden sind, so sind diese in theoretischer Verlängerung als theoretische Kante zwischen der zweiten Außenflanke und dem Nutgrund respektive der zweiten Endfläche zu betrachten.

Eine besonders vorteilhafte Gestaltung mit geneigten bzw. bogenförmigen Verlauf der zweiten Außenflanke wird erzielt, wenn der Abstand des äußeren Endes der zweiten Außenflanke von der ersten Außenflanke zumindest dem 2-fachen Abstand des inneren Endes von der theoretischen Verlängerung der ersten Außenflanke entspricht. D. h., dass die zweite Außenflanke ausgehend von ungefähr der Mitte zur Endfläche hin ungefähr doppelt so stark geneigt ist wie der Verlauf zum Nutgrund hin.

Weiterhin wird eine besonders vorteilhafte Gestaltung erzielt, wenn der Abstand des äußeren Endes von der ersten Außenflanke zumindest der 0,2-fachen Weite der ersten Aufnahmenut entspricht. Somit wird hierdurch - bei sorgfältiger Montage - ein Aufstoßen des zweiten Gehäuseteils bei der Montage auf das Dichtband vermieden. Demgegenüber ist es vorteilhaft, wenn der Abstand des äußeren Endes von der Außenflanke nicht größer als die 0,4-fache Weite der ersten Aufnahmenut gewählt wird. Hierdurch wird sichergestellt, dass das Dichtband zuverlässig in die zweite Aufnahmenut eingefädelt werden kann und nicht unbeabsichtigt umgeknickt.

Der Abstand des inneren Endes der zweiten Außenflanke von der theoretischen Verlängerung der ersten Außenflanke wird in besonders vorteilhafter Weise kleiner als die 0,1-fache Weite der ersten Aufnahmenut gewählt. In aller Regel ist diese Abweichung von der Verlängerung der ersten Außenflanke hinreichend zur Gewährleistung einer zuverlässigen Anlage des Dichtbandes an der zweiten Außenflanke. Demgegenüber ist es vorteilhaft, wenn der Abstand des ersten Endes von der Verlängerung der ersten Außenflanke maximal der 0,2-fachen Weite der ersten Aufnahmenut entspricht.

Zur Gewährleistung einer zuverlässigen Abdichtung mittels des Dichtbandes mit einer Anlage an der ersten Außenflanke und der zweiten Außenflanke, insbesondere unter Berücksichtigung eines geneigten bzw. bogenförmigen Verlaufes der zweiten Außenflanke ist es vorteilhaft, wenn die Breite des Dichtbandes zumindest der 0,8-fachen Tiefe bei der Aufnahmenut entspricht. Besonders vorteilhaft ist es, wenn die Breite zumindest der 0,9-fachen Tiefe der Aufnahmenuten entspricht. Die Tiefe der Aufnahmenuten wird hierbei definiert durch den Abstand des ersten Nutgrundes der ersten Aufnahmenut zum zweiten Nutgrund der zweiten Aufnahmenut. Hierbei sollte die Breite des Dichtbandes maximal der Tiefe der beiden Aufnahmenuten entsprechen.

In den nachfolgenden Figuren wird eine beispielhafte Ausführungsform für eine erfindungsgemäße Dichtungsanordnung sowie beispielhafte Gestaltungen der zweiten Außenflanke skizziert. Es zeigen:
- Fig. 1: ein Beispiel für eine erfindungsgemäße Dichtungsanordnung zwischen zwei Gehäuseflanschen;
- Fig. 2: eine Detailansicht zur Ausführung aus Fig. 1;
- Figuren 3-5: beispielhafte Verläufe für die zweite Außenflanke.

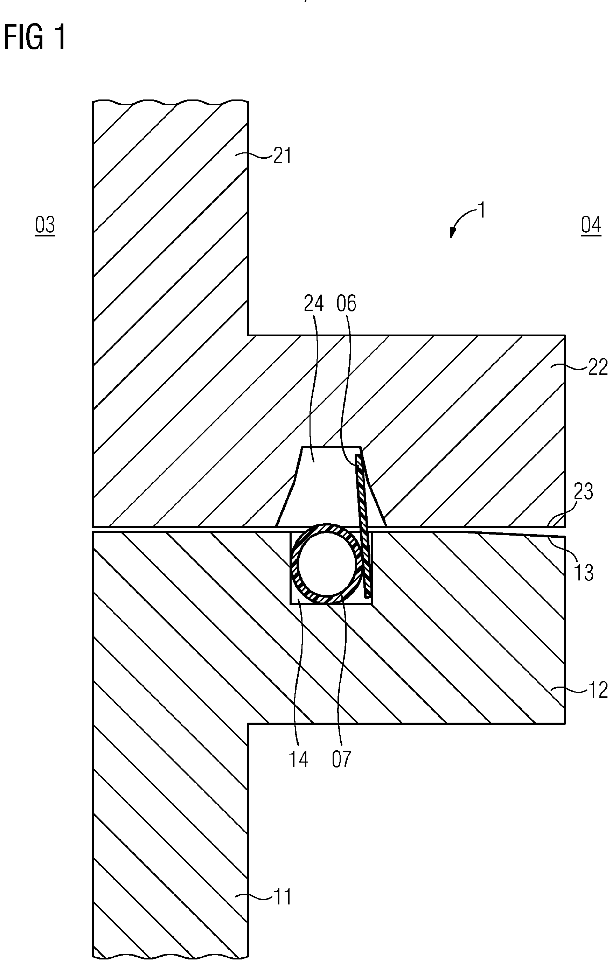

In der Fig. 1 ist ein Ausführungsbeispiel für eine erfindungsgemäße Dichtungsanordnung 01 skizziert, wobei abschnittsweise ein erstes Gehäuseteil 11 (untere Seite) und ein zweites Gehäuseteil 12 (obere Seite) mit jeweils einem Flansch 12, 22 skizziert ist. Die gegenüberliegenden Flanschflächen bilden hierbei die erste Endfläche 13 des ersten Gehäuseteils 11 bzw. die zweite Endfläche 23 des zweiten Gehäuseteils 21. Zwischen den Endflächen ist der Spalt definiert, den es mittels der Dichtungsanordnung 01 abzudichten gilt. Dabei befindet sich auf einer Seite des Spaltes bzw. der Endflächen 13, 23 die Innenseite 03 und gegenüberliegend die Außenseite 04. Die Dichtungsanordnung 01 ist in dem Falle wirksam, wenn der Mediendruck auf der Innenseite 03 zumindest dem Mediendruck auf der Außenseite 04 entspricht.

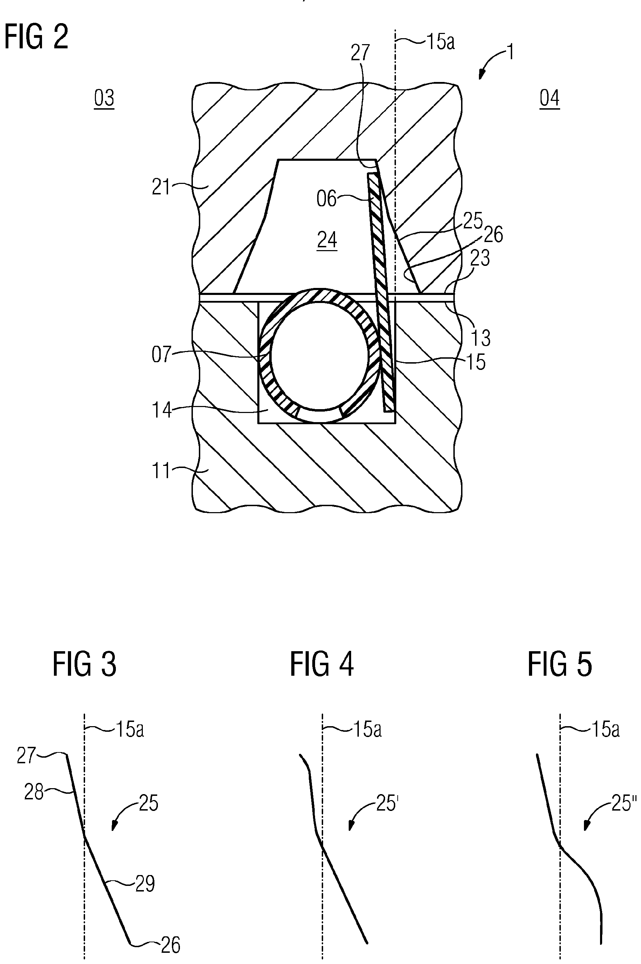

Die Dichtungsanordnung 01 wird vorteilhaft aus der Detailansicht in Fig. 2 ersichtlich. Zu erkennen ist zunächst einmal die erste Aufnahmenut 14 im ersten Gehäuseteil 11. Diese 14 weist eine einfache und vorteilhafte rechteckige Gestalt auf. Dabei bildet die zur Außenseite 04 weisende Flanke der ersten Aufnahmenut 14 die erste Außenflanke 15. Gegenüberliegend befindet sich im zweiten Gehäuseteil 21 die zweite Aufnahmenut 24, welche gleichfalls auf der zur Außenseite 04 weisenden Seite eine zweite Außenflanke 25 aufweist.

Die Dichtungsanordnung 01 umfasst hierbei zunächst einmal das die Dichtung bewirkende Dichtband 06, welches 06 sich entlang der Aufnahmenuten 14, 24 sowie quer zu den Endflächen 13, 23 erstreckt. Wie leicht zu erkennen ist, weist hierbei das Dichtband 06 eine besonders einfache flache Gestalt auf. Dabei liegt das Dichtband 06 mit einem Seitenrand an der ersten Außenflanke 15 und mit dem zweiten Seitenrand an der zweiten aus Außenflanke 25 an. Die Dichtwirkung wird einerseits durch den Druckunterschied zwischen der Innenseite 03 und der Außenseite 04 bewirkt. Zur Gewährleistung einer anfänglichen Abdichtung, insbesondere bei geringen Druckunterschieden, sowie insbesondere zur Sicherung der Lage des Dichtbandes 06 bei der Montage weist die Dichtungsanordnung 01 weiterhin ein sich entlang der ersten Aufnahmenut 14 erstreckendes Spiralband 07 auf. Hierbei ist vorgesehen, dass das Spiralband 07 unter geringfügiger Pressung in der ersten Aufnahmenut 14 zwischen einer inneren Flanke und der ersten Außenflanke 15, bzw. dem Dichtband 06 eingespannt ist. Diese elastische Verformung des Spiralbandes 07 bewirkt hierbei eine ausgehend vom Spiralband 07 radiale Kraft auf das Dichtband 06, sodass dieses an die erste Außenflanke 15 und die zweite Außenflanke 25 angepresst wird.

Weiterhin ist die besonders vorteilhafte Gestaltung der zweiten Außenflanke 25 zu erkennen, welche 25 einen gegenüber der ersten Außenflanke 15 geneigten Verlauf aufweist. Hierzu ist eine Verlängerung 15a der ersten Außenflanke 15 dargestellt. Zu erkennen ist, dass ein äußeres Ende 26 der zweiten Außenflanke 25 an der zweiten Endfläche 23 einen Abstand zur ersten Endfläche 15 bzw. dessen Verlängerung 15a aufweist und hierbei zur Außenseite hin 04 versetzt angeordnet ist. Demgegenüber ist ein inneres Ende 27 der zweiten Außenflanke 25 am Nutgrund der zweiten Aufnahmenut 24 zur Innenseite 03 versetzt und beanstandet zur Verlängerung 15a der zur ersten Außenflanke 15 angeordnet.

Es ist offensichtlich, dass dieser bogenförmige bzw. geneigte Verlauf der zweiten Außenflanke 25 beim Fügen des zweiten Gehäuseteils 21 auf dem ersten Gehäuseteil 11 mit der Form montierten Anordnung von Dichtband 06 und Spiralband 07 dazu führt, dass sich das Dichtband 06 in die zweite Aufnahmenut 24 einfädelt. Weiterhin ist offensichtlich, dass der geneigte Verlauf mit dem Versatz zur Innenseite 03 weisend oberhalb der Mitte der zweiten Außenflanke 25 dazu führt, dass gewährleistet werden kann, dass im montierten Zustand das Dichtband 06 in jedem Fall zuverlässig an der zweiten Außenflanke 25 anliegt.

Ein wesentlicher Aspekt für die besonders vorteilhafte Gestaltung ist der geneigte bzw. bogenförmige Verlauf der zweiten Außenflanke 25. Hierzu zeigen die Figuren 3 bis 5 weitere mögliche Gestaltungsformen jeweils anhand der Verlängerung 15a der ersten Außenflanke 15. In der Fig. 3 wird die Außenflanke von 2 geradlinig geneigten Abschnitten gebildet, wobei der Abschnitt zum äußeren Ende 26 weisend stärker geneigt ist als der Abschnitt zum inneren Ende 27. In der Fig. 4 ist der Verlauf der zweiten Außenflanke 25' ausgehend von der Mitte zum inneren Ende 27 bogenförmig ausgeführt. Demgegenüber ist in Fig. 5 ein Ausführungsbeispiel dargestellt, bei dem die zweite Außenflanke 25" im Verlauf zum äußeren Ende 26 einen bogenförmigen Verlauf aufweist.

## Patentansprüche

1. Dichtungsanordnung (01) zur Abdichtung eines Spaltes zwischen einem ersten Gehäuseteil (11), welches (11) eine erste Endfläche (13) aufweist, und einem zweiten Gehäuseteil (21), welches (21) eine der ersten Endfläche (13) gegenüberliegende zweite Endfläche (23) aufweist, wobei zwischen den Endflächen (13, 23) ein Spalt und auf einer Seite eine Innenseite (03) und auf gegenüberliegender Seite eine Außenseite (04) definiert ist, wobei die Dichtungsanordnung (01) geeignet ist zur Verwendung mit einem geringerem Mediendruck auf der Außenseite (04) und einem größerem Mediendruck auf der Innenseite (03), wobei im ersten Gehäuseteil (11) eine entlang des Spaltes verlaufende sich zur zweiten Endfläche (23) öffnende erste Aufnahmenut (14) mit einer zur Außenseite (04) weisenden ersten Außenflanke (15) angeordnet ist, und wobei im zweiten Gehäuseteil (21) eine der ersten Aufnahmenut (14) gegenüberliegende zweite Aufnahmenut (24) mit einer zur Außenseite (04) weisenden zweiten Außenflanke (25) angeordnet ist,
umfassend ein entlang der Aufnahmenuten (14, 24) verlaufendes Dichtband (06), welches (06) eine quer zu den Endflächen (13, 23) erstreckende flache Gestalt aufweist und an beiden Außenflanken (15, 25) anliegt, weiterhin umfassend ein elastisches Spiralband (07), dessen (07) Mittelachse innerhalb der ersten Aufnahmenut (14) angeordnet ist und welches (07) sich entlang der ersten Aufnahmenut (14) erstreckt und Druckkraft auf das Dichtband (06) ausübt.

2. Dichtungsanordnung (01) nach Anspruch 1,
**dadurch gekennzeichnet,**
**dass** die beiden Endflächen (13, 23) aufeinander liegende Flanschflächen eines Gehäuses (11, 21) sind.

3. Dichtungsanordnung (01) nach Anspruch 1 oder 2,
**dadurch gekennzeichnet,**
**dass** die erste Aufnahmenut (14) und die zweite Aufnahmenut (15) eine im Querschnitt spiegelsymmetrische Gestalt aufweisen.

4. Dichtungsanordnung (01) nach einem der Ansprüche 1 bis 3,
**dadurch gekennzeichnet,**
**dass** die erste Aufnahmenut (14) im Querschnitt im Wesentlichen rechteckig ausgeführt ist.

5. Dichtungsanordnung (01) nach einem der Ansprüche 1 bis 4,
**dadurch gekennzeichnet,**
**dass** die zweite Außenflanke (24) im Querschnitt einen geneigten und/oder bogenförmigen Verlauf aufweist.

6. Dichtungsanordnung (01) nach Anspruch 5,
**dadurch gekennzeichnet,**
**dass** eine theoretische Verlängerung (15a) der ersten Außenflanke (15) die zweite Außenflanke (15) in der Mitte +/-20% der Tiefe der zweiten Aufnahmenut (24) schneidet.

7. Dichtungsanordnung (01) nach Anspruch 5 oder 6,
**dadurch gekennzeichnet,**
**dass** ein äußeres Ende (26) der zweiten Außenflanke (25) an der zweiten Endfläche (23) zur Außenseite (04) weisend beabstandet von der ersten Außenflanke (15, 15a) und ein inneres Ende (27) der zweiten Außenflanke (25) am Nutgrund der zweiten Aufnahmenut (24) zur Innenseite (03) weisend beabstandet von einer theoretischen Verlängerung (15a) der ersten Außenflanke (15) angeordnet ist.

8. Dichtungsanordnung (01) nach Anspruch 7,
**dadurch gekennzeichnet,**
**dass** der Abstand des äußeren Endes (26) von der ersten Außenflanke (15, 15a) zumindest dem 2-fachen Abstand des inneren Endes (27) von der ersten Außenflanke (15, 15a) entspricht; und/oder
**dass** der Abstand des äußeren Endes (26) von der ersten Außenflanke (15, 15a) zumindest der 0,2-fachen und/oder maximal der 0,4-fachen Weite der ersten Aufnahmenut (24) entspricht; und/oder
**dass** der Abstand des inneren Endes (27) von der ersten Außenflanke (15, 15a) zumindest der 0,1-fachen und/oder maximal der der 0,2-fachen Weite der ersten Aufnahmenut (24) entspricht.

9. Dichtungsanordnung (01) nach einem der Ansprüche 1 bis 8,
**dadurch gekennzeichnet,**
**dass** die Breite des Dichtbandes (06) zumindest der 0,8-fachen, insbesondere zumindest der 0,9-fachen Tiefe beider Aufnahmenuten (14, 24) entspricht, wobei insbesondere die Breite des Dichtbandes (06) maximal der Tiefe beider Aufnahmenuten (14, 24) entspricht.
